# DEMANDE DE BREVET EUROPEEN

(11) **EP 1 112 681 A2**
(43) Date de publication de la demande: **04.07.2001**
(21) Numéro de dépôt: 00403617.4
(22) Date de dépôt: 21.12.2000
(51) Int. Cl.: A01K 1/01

(54) **Dispositif d'actionnement, notamment destiné à un racleur d'étable**

(30) Priorité: 29.12.1999 FR 9916828
(71) Demandeur: Sermap S.A., 25510 Pierrefontaine les Varans (FR)
(72) Inventeur: Millot, Simon, 25000 Besançon (FR)
(74) Mandataire: Ballot, Paul Denis Jacques

(57) **Abrégé**

- Dispositif d'actionnement notamment destiné à un racleur d'étable pour l'élimination de déchets et constitué par un rail déplaçable dans une goulotte fixée au sol selon un mouvement rectiligne alternatif transmis par ledit dispositif entre une position avant et une position arrière selon une course prédéterminée et sur lequel rail et monté coulissant un sabot porteur d'un organe de raclage, caractérisé en ce qu'il est constitué par un vérin électrique (1) comprenant des moyens de fixation articulés (9) interposés entre d'une part un bâti fixe (non représenté) et d'autre part dudit vérin (1) de manière à permettre le débattement angulaire tous azimuts de celui-ci et obtenir ainsi son auto-alignement par rapport au rail (non représenté) à déplacer, selon un mouvement rectiligne alternatif.

## Description

La présente invention concerne un dispositif d'actionnement notamment destiné à un racleur d'étable pour l'élimination des déchets au sol, présentant une surface régulière.

L'invention trouve une application particulièrement avantageuse dans le domaine de l'élevage animal, pour l'évacuation des fumiers ou des lisiers dans les couloirs d'exercices des étables.

On connaît de l'état de la technique un ensemble de raclage qui est constitué par un rail déplaçable dans une goulotte fixée au sol, selon un mouvement rectiligne alternatif transmis par ledit dispositif d'actionnement, entre une position avant et une position arrière, selon une course prédéterminée, et sur lequel rail est monté coulissant, un sabot porteur d'un organe de raclage, susceptible de se déplacer entre deux positions d'extrémité du rail, par l'intermédiaire d'un système à cliquet, intégré au sabot et coopérant cycliquement et de manière débrayable avec au moins une série d'encoches du rail, pour provoquer le déplacement pas à pas du sabot d'où de l'organe de raclage le long dudit rail dans un sens ou dans l'autre, après inversion.

Dans ce type d'installation connue, le dispositif d'actionnement est constitué par une centrale hydraulique commandant en manoeuvre un vérin hydraulique de poussée actionnant le rail alternativement.

L'expérience a démontré que l'utilisation d'un système de poussée à commande hydraulique présentait un grand nombre d'inconvénients.

En effet, l'installation d'une centrale hydraulique doit de préférence être prévue dès la conception des bâtiments car son implantation nécessite une infrastructure particulière à prévoir, car son positionnement doit nécessairement se situer dans l'axe du couloir, c'est à dire généralement du coté de la fumière. Ceci représente souvent une contrainte.

De plus la centrale hydraulique qui génère la pression hydraulique du vérin est en général située assez loin de celui-ci. Il en résulte des pertes de charge importante dans les canalisations et surtout par temps froid, des difficultés de fonctionnement.

L'installation des tuyauteries hydrauliques est rarement faite dans les normes et dans les règles de l'art et cela accentue les risques de dysfonctionnement.

De plus l'inversion du vérin se faisant par manque de débit, (inverseur à surpression) elle provoque des coups de bélier dans tout le circuit hydraulique, contribuant à une fatigue générale des organes.

De plus pour un bon fonctionnement de l'installation, le vérin doit être toujours dans l'axe de poussée du rail, ce qui implique une certaine précision dans la mise en place du vérin.

Jusqu'à présent, si seuls les vérins hydrauliques ont été utilisés dans ce type d'installation, c'est parce qu'en fait il n'existe à ce jour sur le marché aucun vérin électrique capable d'exercer une poussée de l'ordre de trois tonnes qui est la force de poussée nécessaire dans ce domaine.

La présente invention a pour objectif de remédier à l'ensemble des inconvénients précités en comblant ce vide technologique, en proposant un vérin électrique d'un type nouveau capable de remplir la fonction précitée, par exemple. A cet effet l'invention concerne un dispositif d'actionnement notamment destiné à un racleur d'étable pour l'élimination de déchets et constitué par un rail déplaçable dans une goulotte fixée au sol selon un mouvement rectiligne alternatif transmis par ledit dispositif entre une position avant et une position arrière selon une course prédéterminée et sur lequel rail et monté coulissant un sabot porteur d'un organe de raclage et susceptible de se déplacer entre deux positions d'extrémité du rail par l'intermédiaire d'un système à cliquet, intégré au sabot et coopérant cycliquement et de manière débrayable avec au moins une série d'encoches du rail, pour provoquer le déplacement pas à pas du sabot d'où de l'organe de raclage le long dudit rail, dans un sens ou dans l'autre après inversion, caractérisé en ce qu'il est constitué par un vérin électrique comprenant :
- un moteur de commande en rotation,
- une tige centrale, fixe en translation et accouplée au moteur, formant au moins en partie une vis de longueur égale à la course à obtenir,
- un manchon coaxial formant un écrou fileté sur toute sa longueur, fixe en rotation et coopérant avec la partie filetée de la tige centrale, de manière à ce que la rotation de celle-ci provoque le déplacement en translation dudit manchon fileté,
- un piston creux coaxial solidaire par collage ou soudage du manchon fileté formant écrou et susceptible de se déplacer en translation avec celui-ci, selon une course de coulissement prédéterminée,
- un fût de piston coaxial, fixe en rotation et en translation, dans lequel coulisse ledit piston par l'intermédiaire d'au moins un organe de guidage également fixe solidaire dudit fût,
- des moyens de fixation articulés interposés entre d'une part un bâti fixe (non représenté) et d'autre part le fût, de manière à permettre le débattement angulaire tous azimuts du vérin et obtenir ainsi son auto-alignement par rapport au rail (non représenté) à déplacer, selon un mouvement rectiligne alternatif,
- des moyens de liaison de l'extrémité libre du piston avec ledit rail à commande.

Il est ainsi facilement possible d'installer un vérin électrique par racleur sur chaque couloir d'exercice, ce qui permet une automatisation très facile de l'ensemble, alors qu'auparavant il fallait actionner des vannes à partir d'un groupe hydraulique unique ce qui offrait moins de possibilités d'automatisation.

De plus comme le démontrera la description, un vérin selon l'invention, permet son auto-alignement par rapport au rail à poussée. Un excellent rendement mécanique est obtenu grâce à des frottements très faibles des différents organes entre eux, ce qui permet de choisir une puissance du moteur qui est uniquement liée à la force de poussée et donc réduire notablement la puissance installée.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :

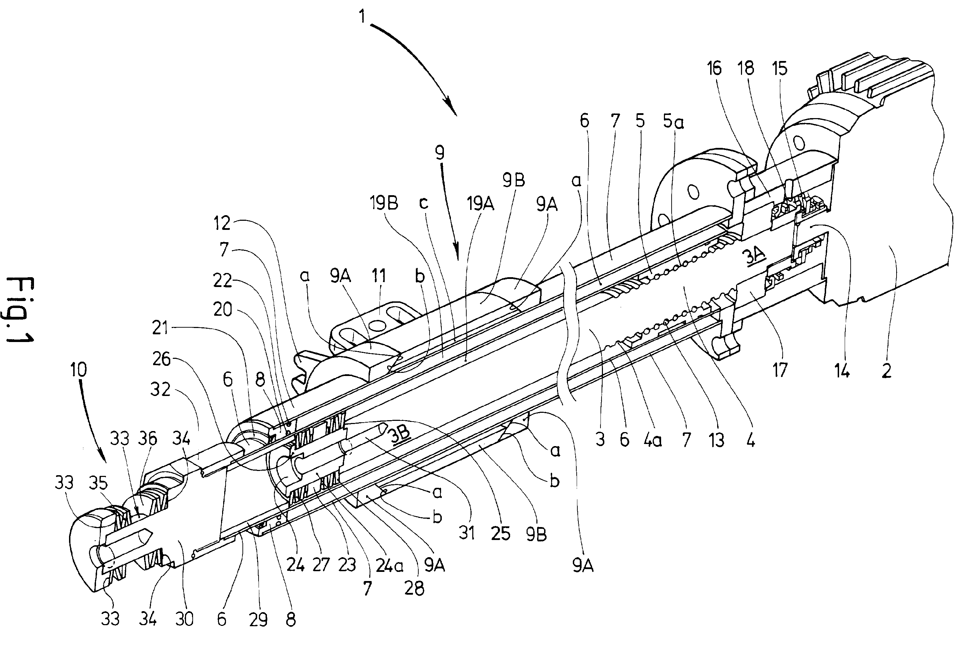

La figure 1 est une vue d'ensemble en coupe longitudinale d'un vérin électrique selon l'invention avec une partie centrale tronquée. Le vérin 1 globalement désigné sur la figure 1 est destiné, mais non limitativement, à un racleur d'étable constitué de manière connue par un rail (non représenté) se déplaçant dans une goulotte fixée au sol selon un mouvement rectiligne alternatif transmis par ledit vérin entre une position avant et une position arrière selon une course prédéterminée et sur lequel rail est monté coulissant un sabot (non représenté) porteur d'un organe de raclage (non représenté) et susceptible de se déplacer entre deux positions d'extrémité du rail par l'intermédiaire d'un système à cliquet (non représenté) intégré au sabot et coopérant cycliquement et de manière débrayable avec au moins une série d'encoches du rail, pour provoquer le déplacement pas à pas du sabot d'où de l'organe de raclage le long dudit rail dans un sens ou dans l'autre après inversion.

Selon l'invention le vérin électrique comprend :
- un moteur 2 de commande en rotation,
- une tige centrale 3, fixe en translation et accouplée au moteur 2, formant au moins en partie une vis 4 de longueur égale à la course à obtenir,
- un manchon coaxial 5 formant un écrou fileté sur toute sa longueur, fixe en rotation et coopérant avec la partie filetée 4 de la tige centrale 5, de manière à ce que la rotation de celle-ci provoque le déplacement en translation dudit manchon fileté 5,
- un piston creux coaxial 6 solidaire par collage ou soudage du manchon fileté 5 formant écrou et susceptible de se déplacer en translation avec celui-ci, selon une course de coulissement prédéterminée,
- un fût de piston coaxial 7, fixe en rotation et en translation, dans lequel coulisse ledit piston 6 par l'intermédiaire d'au moins un organe de guidage 8 également fixe solidaire dudit fût 7,
- des moyens de fixation articulés 9 interposés entre d'une part un bâti fixe (non représenté) et d'autre part le fût 7, de manière à permettre le débattement angulaire tous azimuts du vérin 1 et obtenir ainsi son auto-alignement par rapport au rail (non représenté) à déplacer, selon un mouvement rectiligne alternatif,
- des moyens de liaison 10 de l'extrémité libre du piston 1 avec ledit rail à commande.

Les moyens de fixation articulés 9 du vérin 1 sont constitués par un manchon cylindrique 9 en deux parties 9A, 9B entourant localement le fût 7 dont :
- l'une 9A solidaire du fût 7 du vérin 1 forme un siège la de portée sphérique qui est réalisé sur des zones internes des deux extrémités dudit manchon 9 et dont
- l'autre centrale, 9B rendue solidaire du bâti fixe est interposée entre lesdites extrémités et ses propres extrémités, une rotule b de portée correspondante, de manière à ce que le vérin 1 ainsi fixé puisse se débattre angulairement autour de son axe longitudinal par rapport au bâti fixe (non représenté) qui le supporte.

Le diamètre interne de l'élément central 9B du manchon 9 est supérieur à celui du fût fixe 7 de manière à délimiter un espace c autorisant le débattement angulaire de la partie fixe 9A par rapport à la partie 9B du manchon 9.

Par ailleurs la partie 9B formant rotule b est solidaire d'une patte de fixation 11, par l'intermédiaire de laquelle elle relie l'ensemble de vérin 1 au bâti fixe.

Préferentiellement, la partie 9A formant siège a est rendue solidaire du fût 7 du vérin 1 par soudure.

Il est à noter que la partie 9B formant siège b comporte une patte de reprise de couple 12.

Selon une autre caractéristique de la partie filetée 4 de la tige centrale 3 accouplée en rotation au moteur 2 est une vis à billes 13, interposées entre le filetage 5a du manchon fileté 5 formant écrou et le filetage 4a de ladite vis 4.

Selon une autre caractéristique de l'invention le moteur de commande 2 comporte un arbre de sortie 14, accouplé à la tige centrale 3 du vérin 1 formant vis 4, par l'intermédiaire d'éléments de friction constituant un limiteur de couple 15.

Selon le présent mode de réalisation l'une des extrémités 3A de la tige centrale 3 du vérin 1 formant vis 4 est supportée dans un manchon cylindrique de liaison 16 interposé entre le moteur 2 et le fût 7 du vérin 1, par l'intermédiaire d'un roulement à rotule 17, de manière à absorber les efforts axiaux en sortie de piston 1.

Egalement, l'extrémité 3A de la tige centrale 3 du vérin 1 formant vis 4 comporte une couronne de codage 18 destinée à contrôler la rotation de la vis et à déterminer la position de l'écrou sur la vis.

Comme le montre bien la figure une double chambre coaxiale 19A, 19B est délimitée respectivement entre la tige centrale 3 du vérin 1 formant vis 4 et le piston 6 et entre ce dernier et le fût 7, pour contenir un bain d'huile dans lequel baigne l'ensemble vis-écrou-piston.

L'organe de guidage par l'intermédiaire duquel coulisse le piston 6 dans le fût 7, comporte des moyens d'étanchéité du bain d'huile qui sont constitués d'une part par un joint dynamique concentrique 20 dirigé vers la chambre 19B et d'autre part par un joint racleur 21 dirigé vers l'extérieur, l'un 20 et l'autre 21 étant interposés entre le piston 6 et ledit organe de guidage 8.

Un joint statique 22 est interposé entre ledit organe de guidage 8 et le fût 7.

Par ailleurs l'autre extrémité 3B de la tige centrale 3 du vérin 1 formant vis 4 est supportée concentriquement à l'intérieur du piston 6 par l'intermédiaire d'une bague de centrage 23.

Cette bague de centrage 23 est disposée sur un élément cylindrique 24, rapporté en bout 3B de la tige centrale 3 formant vis 4 et délimitant deux épaulements 25 et 26, l'un 25 entre son corps cylindrique 24a et l'extrémité frontale de la tige 3 et l'autre par une collerette 26 qui lui est propre, de manière à constituer deux butées à deux series de rondelles « Belleville » 27 et 28 disposées de part et d'autre de la bague de centrage 23 et destinées à constituer un amortisseur de fin de course, en venant en contact d'une part avec l'épaulement 25 de ladite extrémité frontale de la tige 3 et d'autre part avec une entretoise 29 venant en appui contre la tête de piston 30 du vérin 1 portant les moyens de fixation 10 au rail (non représenté).

L'élément cylindrique 24 est rapporté en bout 3B de la tige centrale 3 par l'intermédiaire d'une vis (non représentée) traversant ledit élément 24 pour se visser dans un trou fileté 31 de l'extrémité 3B de la tige centrale 3.

La tête de piston 30 est reliée au piston 6 par l'intermédiaire d'une pièce de liaison 32 concentrique externe.

Les moyens de fixation 10 du rail sur la tête de piston 30 du vérin 1 sont constituées par une gorge 33 ménagée sur cette dernière qui est délimitée par deux épaulements 33, 34 contre lesquels sont prédisposés deux series de rondelles « Belleville » 35, 36 formant double amortisseurs entre lesquels est insérée et fixée une extrémité correspondante (non représentée) du rail.

## Revendications

1. Dispositif d'actionnement notamment destiné à un racleur d'étable pour l'élimination de déchets et constitué par un rail déplaçable dans une goulotte fixée au sol selon un mouvement rectiligne alternatif transmis par ledit dispositif entre une position avant et une position arrière selon une course prédéterminée et sur lequel rail est monté coulissant un sabot porteur d'un organe de raclage, susceptible de se déplacer entre deux positions d'extrémité du rail par l'intermédiaire d'un système à cliquet, intégré au sabot et coopérant cycliquement et de manière débrayable avec au moins une série d'encoches du rail, pour provoquer le déplacement pas à pas du sabot d'où de l'organe de raclage le long dudit rail, dans un sens ou dans l'autre après inversion, caractérisé en ce qu'il est constitué par un vérin électrique (1) comprenant :
- un moteur (2) de commande en rotation,
- une tige centrale (3), fixe en translation et accouplée au moteur (2), formant au moins en partie une vis(4) de longueur égale à la course à obtenir,
- un manchon coaxial (5) formant un écrou fileté sur toute sa longueur, fixe en rotation et coopérant avec la partie filetée (4) de la tige centrale (5), de manière à ce que la rotation de celle-ci provoque le déplacement en translation dudit manchon fileté (5),
- un piston creux coaxial (6) solidaire par collage ou soudage du manchon fileté (5) formant écrou et susceptible de se déplacer en translation avec celui-ci, selon une course de coulissement prédéterminée,
- un fût de piston coaxial (7), fixe en rotation et en translation, dans lequel coulisse ledit piston (6) par l'intermédiaire d'au moins un organe de guidage (8) également fixe solidaire dudit fût (7),
- des moyens de fixation articulés (9) interposés entre d'une part un bâti fixe (non représenté) et d'autre part le fût (7) de manière à permettre le débattement angulaire tous azimuts du vérin (1) et obtenir ainsi son auto-alignement par rapport au rail (non représenté) à déplacer, selon un mouvement rectiligne alternatif,
- des moyens de liaison (10) de l'extrémité libre du piston (1) avec ledit rail à commande.

2. Dispositif d'actionnement notamment destiné à un racleur d'étable selon la revendication 1, caractérisé en ce que les moyens de fixation articulés sont constitués par un manchon cylindrique (9) en deux parties (9A, 9B)entourant localement le fût (7) dont :
- l'une (9A) solidaire du fût (7) du vérin (1) forme un siège (la) de portée sphérique qui est réalisé sur des zones internes des deux extrémités dudit manchon (9) et dont
- l'autre centrale, (9B) rendue solidaire du bâti fixe est interposée entre lesdites extrémités et forme à ses propres extrémités, une rotule (b) de portée correspondante, de manière à ce que le vérin (1) ainsi fixé puisse se débattre angulairement autour de son axe longitudinal par rapport au bâti fixe (non représenté) qui le supporte.

3. Dispositif d'actionnement notamment destiné à un racleur d'étable selon revendication 2, caractérisé en ce que la partie (9B) formant rotule (b) est solidaire d'une patte de fixation (11), par l'intermédiaire de laquelle elle relie l'ensemble de vérin (1) au bâti fixe.

4. Dispositif d'actionnement notamment destiné à un racleur d'étable selon la revendication 2, caractérisé en ce que la partie (9A) formant siège (a) est rendue solidaire du fût (7) du vérin (1) par soudure.

5. Dispositif d'actionnement notamment destiné à un racleur d'étable selon les revendications 2 ou 4, caractérisé en ce que la partie (9B) formant siège (b) comporte une patte de reprise de couple (12).

6. Dispositif d'actionnement notamment destiné à un racleur d'étable selon la revendication 1, caractérisé en ce que la partie filetée (4) de la tige centrale (3) accouplée en rotation au moteur (2) est une vis à billes (13), interposées entre le filetage (5a) du manchon fileté (5) formant écrou et le filetage (4a) de ladite vis (4).

7. Dispositif d'actionnement notamment destiné à un racleur d'étable selon la revendication 1, caractérisé en ce que le moteur de commande (2) comporte un arbre de sortie (14), accouplé à la tige centrale (3) du vérin (1) formant vis (4), par l'intermédiaire d'éléments de friction constituant un limiteur de couple (15).

8. Dispositif d'actionnement notamment destiné à un racleur d'étable selon la revendication 1, caractérisé en ce que l'une des extrémités (3A) de la tige centrale (3) du vérin (1) formant vis (4) est supportée dans un manchon cylindrique de liaison (16) interposé entre le moteur (2) et le fût (7) du vérin (1), par l'intermédiaire d'un roulement à rotule (17), de manière à absorber les efforts axiaux en sortie de piston (1).

9. Dispositif d'actionnement notamment destiné à un racleur d'étable selon la revendication 1, caractérisé en ce que l'extrémité (3A) de la tige centrale (3) du vérin (1) formant vis (4) comporte une couronne de codage (18) destinée à contrôler la rotation de la vis et connaître la position de l'écrou sur celle-ci.

10. Dispositif d'actionnement notamment destiné à un racleur d'étable selon la revendication 1, caractérisé en ce qu'une double chambre coaxiale (19A, 19B) est délimitée respectivement entre la tige centrale (3) du vérin (1) formant vis (4) et le piston (6) et entre ce dernier et le fût (7), pour contenir un bain d'huile dans lequel baigne l'ensemble vis-écrou-piston.

11. Dispositif d'actionnement notamment destiné à un racleur d'étable selon les revendications 1 et 10, caractérisé en ce que l'organe de guidage (8), par l'intermédiaire duquel coulisse le piston (6) dans le fût (7), comporte des moyens d'étanchéité du bain d'huile qui sont constitués d'une part par un joint dynamique concentrique (20) dirigé vers la chambre (19B) et d'autre part par un joint racleur (21) dirigé vers l'extérieur, l'un (20) et l'autre (21) étant interposés entre le piston (6) et ledit organe de guidage (8).

12. Dispositif d'actionnement notamment destiné à un racleur d'étable selon la revendication 1, caractérisé en ce que l'autre extrémité (3B) de la tige centrale (3) du vérin (1) formant vis (4) est supportée concentriquement à l'intérieur du piston (6) par l'intermédiaire d'une bague de centrage (23).

13. Dispositif d'actionnement notamment destiné à un racleur d'étable selon la revendication 1, caractérisé en ce que la bague de centrage (23) est disposé sur un élément cylindrique (24), rapporté en bout (3B) de la tige centrale (3) formant vis (4) et délimitant deux épaulements (25 et 26), l'un (25) entre son corps cylindrique (24a) et l'extrémité frontale de la tige (3) et l'autre par une collerette (26) qui lui est propre, de manière à constituer deux butées à deux series de rondelles « Belleville » (27 et 28) disposées de part et d'autre de la bague de centrage (23) et destinées à constituer un amortisseur de fin de course, en venant en contact d'une part avec l'épaulement (25) de ladite extrémité frontale de la tige (3) et d'autre part avec une entretoise (29) venant en appui sur la tête de piston (30) du vérin (1) portant les moyens de fixation (10) au rail (non représenté).

14. Dispositif d'actionnement notamment destiné à un racleur d'étable selon les revendications 1 et 13 caractérisées en ce que la tête de piston (30) est reliée au piston (6) par l'intermédiaire d'une pièce de liaison (32) concentrique externe.

15. Dispositif d'actionnement notamment destiné à un racleur d'étable selon les revendications 1, 13 et 14, caractérisé en ce que les moyens de fixation (10) du rail sur la tête de piston (30) du vérin (1) sont constituées par une gorge (33) ménagée sur cette dernière qui est délimitée par deux épaulements 33, 34 contre lesquels sont prédisposés deux series de rondelles « Belleville » (35, 36) formant double amortisseurs entre lesquels est insérée et fixée une extrémité correspondante (non représentée) du rail.
